# EUROPÄISCHE PATENTSCHRIFT

(11) **EP 0 505 618 B1**
(45) Veröffentlichungstag und Bekanntmachung des Hinweises auf die Patenterteilung: **27.03.1996**
(21) Anmeldenummer: 91120922.9
(22) Anmeldetag: 05.12.1991
(51) Int. Cl.: B29C 47/10

(54) **Verfahren und Vorrichtung zur Bestimmung der von einem Extruder aus einem Aufgabebehälter über die Zeit abgezogenen Menge**
Process and device for determining the mass flow rate removed by an extruder out of a feed hopper
Procédé et dispositif pour determiner le débit de matière retiré par une extrudeuse d'une trémie d'alimentation

(30) Priorität: 27.03.1991 DE 4110135
(43) Veröffentlichungstag der Anmeldung: 30.09.1992
(73) Patentinhaber: Windmöller & Hölscher, D-49525 Lengerich (DE)
(72) Erfinder: Saatkamp, Richard, Dipl.-Ing., W-4540 Lengerich (DE)
(74) Vertreter: Laufhütte, Dieter, Dr.-Ing.

(56) Entgegenhaltungen:
- EP-A- 0 246 568
- EP-A- 0 375 405
- DE-A- 3 304 339
- US-A- 4 237 082
- US-A- 4 789 507
- KUNSTSTOFFE Bd. 79, Nr. 11, 1989, MüNCHEN DE Seiten 1168 - 1171; H.J. SOHN: 'Gravimetrisches Dosieren beim Extrudieren von Rohren, Profilen und Folien'
- KUNSTSTOFFE Bd. 80, Nr. 2, 1990, MüNCHEN DE Seiten 174 - 177; W.E. FREDE: 'Extrudieren mit geregeltem Durchsatz'
- US-I- B579 153 (H. BRINKMANN ET AL.)

## Beschreibung

Die Erfindung betrifft ein verfahren zur Bestimmung der von einem Extruder aus einem mit seinem Auslauf in dessen Einlauf mündenden Aufgabebehälter über die Zeit abgezogenen Menge von Kunststoff-Granulat (nach Gewicht bemessene Menge von Granulat/Zeit), bei dem ständig Granulat in einen Vorratsbehälter geleitet und intermittierend eine Füllmenge (Charge) von Granulat in den Aufgabebehälter geleitet wird, bei dem der Aufgabebehälter vor oder bei Beginn und nach oder bei Beendigung seiner Füllung gewogen und die Zeit gemessen wird, die zwischen den Füllungen zum Abzug der sich aus den Wägungen ergebenden Materialmenge benötigt wird, und bei dem aus den in den gemessenen Zeiten aus dem Aufgabebehälter abgezogenen Materialmengen der zeitliche Materialdurchsatz errechnet wird, sowie eine Vorrichtung zur Durchführung dieses Verfahrens.

Extrudern zur Herstellung beispielsweise von Flachfolien wird Kunststoffgranulat und/oder regranulierte Kunststoffabfälle oder Kunststoffschnitzel über zyklonförmige Behälter zugeführt, aus denen das Material sodann entsprechend der Förderleistung des Extruders abgezogen wird. Hierbei ist es nun ein Bedürfnis, den zeitlichen Materialverbrauch bestimmen zu können, um Aussagen über den Ausstoß des Extruders oder das Metergewicht der extrudierten Kunststoffolien machen zu können. Beispielsweise läßt sich aus dem Metergewicht der extrudierten Kunststoffolien bestimmen, ob die Dicken der extrudierten Folien in dem gewünschten Toleranzbereich liegen. Diese Bestimmung ist aus wirtschaftlichen Gesichtspunkten wichtig, da das eingesetzte Kunststoffmaterial teuer ist und die Herstellung zu dicker Folien, abgesehen von eventuellen späteren Verarbeitungsschwierigkeiten, zu einer unerwünschten Materialvergeudung führt.

Aus EP-A-0 246 568 ist eine Waage zur Massendurchsatzerfassung im Einlauf eines Extruders bekannt, die aus einem mit zu extrudierendem Material füllbaren Waagebehälter mit Wägeeinrichtung und einem Auswertegerät für die von der Wägeeinrichtung gelieferten Meßwerte und aus einem dem Einlauf des Extruders vorgeordneten und zum Einlauf hin offenen, insbesondere trichterförmigen Behälter besteht, in den der Inhalt des Waagebehälters chargenweise entleerbar ist. Um für die Automatisierung des Extruderbetriebes verwertbare Werte für den Massendurchsatz zu erhalten, ist der untere, zum Einlauf des Extruders hin offene Behälter an einer Wägeeinrichtung frei aufgehängt und nur über den Materialstrom mit dem Einlauf gekoppelt, wobei das Auswertegerät die bei kontinuierlicher Erfassung der von der Wägeeinrichtung gelieferten Meßwerte und den durch Differenzierung dieser Meßwerte ermittelten relativen Massendurchsatz in den absoluten Massendurchsatz umrechnet, in dem der von der Wägeeinrichtung des Waagebehälters bei jeder Entleerung enthaltene Wert für das absolute Materialgewicht mit der Differenz der von der Wägeeinrichtung des zum Einlauf hin offenen Behälters gelieferten Meßwerte gleichgesetzt wird.

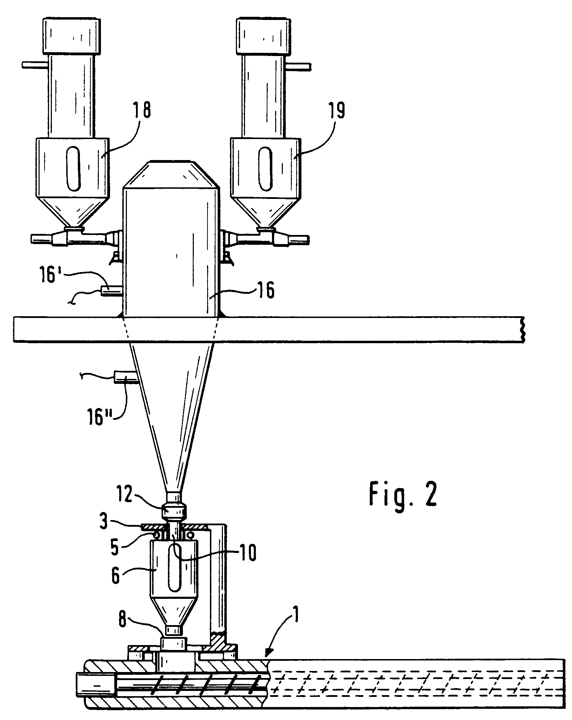

Bei einem anhand der Fig.2 der Zeichnung erläuterten, aus der Praxis bekannten Verfahren der eingangs angegeben Art wird einem zyklonförmigen Behälter Granulat unterschiedlichen Kunststoffs über zwei Dosiereinrichtungen 18,19 zugeführt. Der zyklonförmige Behälter 16 ist mit zwei Initiatoren 16' und 16'' versehen, wobei der obere Initiator 16' im oberen Füllstand und der untere Initiator 16'' im unteren Füllstand zugeordnet ist. Die Dosiereinrichtungen 18,19, beispielsweise aus Vortatsbehältern Granulat abziehende Schneckenförderer, werden eingeschaltet, sobald der Füllstand in dem Behälter 16 den von dem unteren Initiator 16'' gemeldeten unteren Füllstand erreicht hat. Die Dosiereinrichtungen werden abgeschaltet, sobald der obere Initiator 16' den oberen Füllstand ermittelt hat. Der Behälter 16 ragt mit seinem Auslaufstutzen berührungsfrei in einen Aufgabebehälter 6 hinein, wobei in dem Auslaufstutzen ein Ventil 12 angeordnet ist, durch das sich dieser gesteuert öffnen und schließen läßt. Der Aufgabebehälter 6 ist über eine Waage 5 an einem mit dem Extruder 1 verbundenen Tragarm 3 aufgehängt. Aus dem Aufgabebehälter 6 fließt kontinuierlich Granulat über die Einlaßöffnung 8 in den Extruder 1. Der Auslaufstutzen des Aufgabebehälters 6 mündet ebenfalls berührungsfrei in die Einlaßöffnung 8. Sobald das Gewicht des Aufgabebehälters 6 samt Füllung einen unteren Wert unterschritten hat, wird das Ventil 12 so lange geöffnet, bis ein voreingestelltes Sollgewicht erreicht ist. Dann wird das Ventil 12 wieder geschlossen. Durch die Messung der Zeit, während der die jeweils aufgegebene Füllmenge aus dem Aufgabebehälter 6 abgezogen wird, läßt sich der Durchsatz an Granulat durch den Extruder 1 in kg/Zeit bestimmen.

Schwierigkeiten ergeben sich jedoch bei dieser bekannten Vorrichtung, wenn in den zyklonförmigen Behälter 16 neben Granulat zusätzlich Randstreifenmaterial aufgegeben wird, das beispielsweise durch die randseitige Besäumung der extrudierten Folie gewonnen und in gehäckselter Form zurückgeführt wird. Dieses zurückgeführte Randstreifenmaterial fällt kontinuierlich in etwa gleichbleibender Menge entsprechend der kontinuierlichen Besäumung der extrudierten Flachfolie an. Beim Betrieb des Extruders werden aber die Granulat in den Behälter 16 aufgebenden Dosiereinrichtungen 18,19 abgeschaltet, wenn der Füllstandsmesser 16' das Erreichen des oberen Füllstands meldet. Die Dosiereinrichtungen 18 und 19 bleiben so lange abgeschaltet, bis die Füllstandshöhe in dem Behälter 16 auf die von dem unteren Initiator 16'' erfaßte Füllstandshöhe abgesackt ist. Während dieser Zeit, in der die Dosiereinrichtungen 18,19 kein Granulat zuführen, wird aber kontinuierlich Randstreifenmaterial in den Behälter 16 aufgegeben, so daß sich oberhalb der absinkenden Granulatschicht eine polsternde Schicht aus Randstreifenmaterial bildet. In dem Behälter 16 kann somit das Randstreifenmaterial nicht gleichmäßig mit dem zugeführten Granulat gemischt werden, so daß sich entsprechend der unterschiedlichen Schüttdichte und der unterschiedlichen Materialform ein unterschiedliches Einzugsverhalten der Schnecke und daraus resultierend unterschiedliche Förderraten ergeben.

Aufgabe der Erfindung ist es daher, ein Verfahren der eingangs angegebenen Art vorzuschlagen, das auch dann einen gleichmäßigen Materialeinzug in den Extruder gewährleistet, wenn dem zyklonförmigen Behälter neben Granulat Randstreifenmaterial zugeführt wird.

Erfindungsgemäß wird diese Aufgabe bei einem Verfahren der gattungsgemäßen Art dadurch gelöst, daß der Vorratsbehälter im wesentlichen nur als Mischbehälter benutzt und zwischen diesen und den Aufgabebehälter ein zusätzlicher Chargenbereitstellungsbehälter angeordnet wird, in den der Vorratsbehälter mündet, daß in den Vorratsbehälter kontinuierlich mindestens eine Komponente des Granulats und zurückgeführte Randstreifen geleitet werden, daß der Aufgabebehälter und der Chargenbereitstellungsbehälter in Zeitabständen gewogen werden und die Zuführungsgeschwindigkeit der mindestens einen Granulatkomponente entsprechend erhöht oder erniedrigt wird, wenn die Summe der gemessenen Gesamtgewichte der beiden Behälter von einem vorgegebenen Sollgewicht abweicht. Das erfindungsgemäße Verfahren stellt sicher, daß die Gesamtmenge an miteinander vermengtem Granulat und Randstreifenmaterial in dem Aufgabebehälter und dem Chargenbereitstellungsbehälter trotz der intermittierenden Füllung des Aufgabebehälters im wesentlichen konstant bleibt, so daß das Randstreifenmaterial und das Granulat in einem etwa stets gleichbleibendem Mengenverhältnis in den zyklonförmigen Vorratsbehälter aufgegeben werden können und sich in diesem mit im wesentlichen gleichbleibenden Verhältnis miteinander vermischen. Nach dem erfindungsgemäßen Verfahren wird somit der Chargenbereitstellungsbehälter in etwa im gleichen Maße gefüllt, wie sich der Aufgabebehälter entleert, so daß die in den beiden Behältern gespeicherte Gesamtmenge im wesentlichen gleichbleibt. Sollte sich jedoch eine Unter- oder Überfüllung ergeben, wird diese durch die in geeigneten Zeitabständen vorgenommenden Wägungen ermittelt, so daß durch entsprechende Erhöhung oder Erniedrigung der Zuführungsgeschwindigkeit des Granulats die einen störungsfreien Betrieb gewährleistenden Füllungen eingestellt werden können. Die Geschwindigkeitsänderungen bei der Zuführung der mindestens einen Granulatkomponente sind jedoch so gering, daß sich störend bemerkbare Änderungen des Verhältnisses zwischen den Granulatmengen und Randstreifenmengen nicht ergeben. Durch die zusätzliche Anordnung des Chargenbereitstellungsbehälters wird es daher möglich, die in den Aufgabebehälter intermittierend eingeleiteten Füllmengen zu wiegen und die Abzugszeiten zu messen, ohne daß durch diesen intermittierenden Betrieb die eine gute Mischung gewährleistende kontinuierliche Zuführung von Granulat und Randstreifenmaterial unterbrochen werden müßte.

Eine Vorrichtung zur Durchführung des erfindungsgemäßen Verfahrens ist im Anspruch 2 angegeben.

Münden bei einer solchen erfindungsgemäßen Vorrichtung zwei oder mehr Kunststoffgranulat zuführende Fördereinrichtungen in den Vorratsbehälter, ist vorgesehen, daß das Verhältnis von deren Förderraten bei einer Veränderung der Fördergeschwindigkeit gleichbleibt. Aus EP-A-394 869 ist es beispielsweise bekannt, daß dann, wenn einem Behälter mindestens zwei Komponenten über diese aus Vorratsbehältern abziehenden Dosierschnecken zugeführt werden, deren Motoren bei allen geänderten Drehzahlen mit einem festen dem Mischungsverhältnis entsprechenden Drehzahlverhältnis laufen, so daß sichergestellt ist, daß das Mischungsverhältnis, das aufgrund des Drehzahlverhältnisses der Motoren vorgegeben ist, auch dann konstant bleibt, wenn die Motoren zur Änderung der Füllmenge mit unterschiedlichen Drehzahlen laufen.

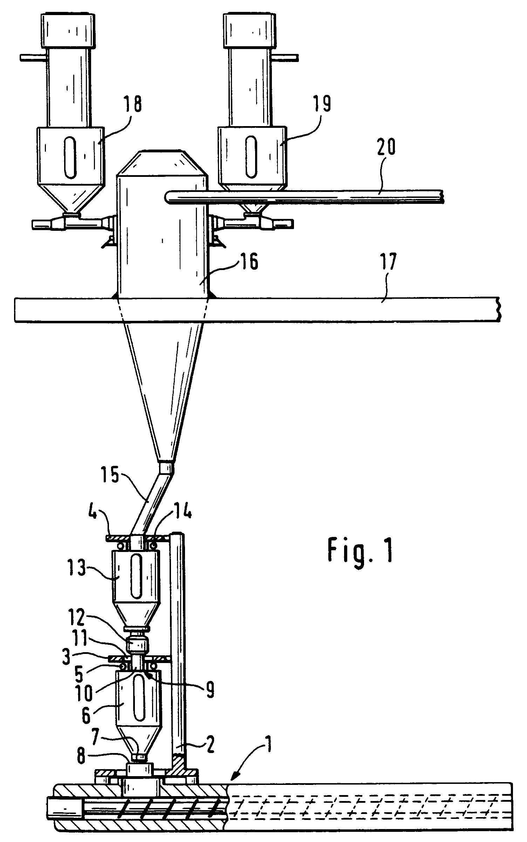

Ein Ausführungsbeispiel der Erfindung wird nachstehend anhand der Fig.1 näher erläutert, die eine Seitenansicht eines Extruders mit der Einlauföffnung des Extruders vorgeschaltetem, an eine Wiegeeinrichtung angehängten Behälter und einem diesen vorgeschalteten, ebenfalls an eine Wiegeeinrichtung angehängten Chargenbereitstellungsbehälter in schematischer Darstellung zeigt.

In der Fig.1 ist der aufgabeseitige Teil eines Extruders 1 dargestellt, auf den ein Halter 2 aufgeschraubt ist. Dieser Halter weist zwei auskragende Arme 3 und 4 auf, wobei an den Tragarm 3 unter Zwischenschaltung einer Waage 5 ein Aufgabebehälter 6 angehängt ist. Die untere stets offene Auslaßöffnung 7 dieses Aufgabebehälters 6 liegt oberhalb der Einlaßöffnung 8 des Extruders 1, so daß ständig Material aus dem Aufgabebehälter 6 in die Extrudereinzugsöffnung 8 fließen kann. Neben der Auslaßöffnung 7 weist der Aufgabebehälter 6 eine obere Einlaßöffnung 9 auf, in die der Auslaufstutzen 10 des Chargenbereitstellungsbehälters 13 hineinragt. Der Auslaufstutzen 10 ist dabei durch einen Durchbruch 11 in dem Arm 3 frei hindurchgeführt. In dem Auslaufstutzen 10 des Chargenbereitstellungsbehälters 13 ist ein gesteuertes Ventil 12 angeordnet, durch das sich dieser öffnen und schließen läßt. Der Chargenbereitstellungsbehälter 13 ist unter Zwischenschaltung einer Waage 14 an den Tragarm 4 angehängt. In die obere Einlaßöffnung des trichterförmigen Chargenbereitstellungsbehälters 13 ragt ein Materialzuführungsrohr 15, welches den Auslaß des zyklonförmigen Mischbehälters 16 bildet. Der Behälter 16 ist auf ein Podest 17 aufgesetzt, wobei in den Behälter 16 über zwei Dosiereinrichtungen 18,19 Granulat sowie über eine Leitung 20 Randstreifenmaterial eingebracht werden.

Im Betrieb der Anlage wird der Behälter 6 zunächst einmal mit einer genau festgelegten Gewichtsmenge beladen, die über die Waage 5 ermittelt wird. Sodann wird das Ventil 12 geschlossen, wobei zum einen kontinuierlich durch den Extruder 1 Material aus dem Behälter 6 abgezogen wird und zum anderen kontinuierlich der Behälter 13 mit Granulat und Randstreifen gefüllt wird. Pro Zeiteinheit wird nun das Ventil 12 geöffnet bzw. geschlossen, so daß eine genaue Aussage darüber gemacht werden kann, wieviel Kilogramm Material pro Zeiteinheit vom Extruder verarbeitet worden sind.

Nachdem vor dem Start der Anlage der Aufgabebehälter 6 beispielsweise vollständig mit Granulat und Randstreifenmaterial gefüllt worden ist, werden die Gesamtgewichte der Behälter 6 und 13 addiert, woraus sich ein bestimmtes Gewicht X ergibt. Dieses bestimmte Gewicht X bildet dann das Sollgewicht, das während des gesamten Betriebes beibehalten wird. Hierzu werden zyklisch die Gesamtgewichte der Behälter 6 und 13 ermittelt und mit dem Sollgewicht X verglichen. Sobald sich eine Differenz ergibt, werden die Schnecken der Dosiereinrichtungen 18 und 19 in ihrer Drehzahl entsprechend geändert. Durch diese Betriebsweise ist gewährleistet, daß der Anteil von frischem Granulat zu dem zurückgeführten Randstreifenmaterial stets etwa gleichbleibt.

## Patentansprüche

1. Verfahren zur Bestimmung der von einem Extruder (1) aus einem mit seinem Auslauf (7) in dessen Einlauf (8) mündenden Aufgabebehälter (6) über die Zeit abgezogenen Menge von Kunststoff-Granulat (nach Gewicht bemessene Menge von Granulat/Zeit), bei dem ständig Granulat in einen Vorratsbehälter (16) geleitet und intermittierend eine Füllmenge (Charge) von Granulat in den Aufgabebehälter (6) geleitet wird, bei dem der Aufgabebehälter (6) vor oder bei Beginn und nach oder bei Beendigung seiner Füllung gewogen und die Zeit gemessen wird, die zwischen den Füllungen zum Abzug der sich aus den Wägungen ergebenden Materialmenge benötigt wird, und bei dem aus den in den gemessenen Zeiten aus dem Aufgabebehälter abgezogenen Materialmengen der zeitliche Materialdurchsatz errechnet wird,
**dadurch gekennzeichnet**,
daß der Vorratsbehälter (16) im wesentlichen nur als Mischbehälter benutzt und zwischen diesem und den Aufgabebehälter (6) ein zusätzlicher Chargenbereitstellungsbehälter (13) angeordnet wird, in den der Vorratsbehälter (16) mündet, daß in den Vorratsbehälter (6) kontinuierlich mindestens eine Komponente des Granulats und zurückgeführtes Randstreifenmaterial geleitet werden,
daß der Aufgabebehälter (6) und der Chargenbereitstellungsbehälter (13) in Zeitabständen gewogen werden und die Zuführungsgeschwindigkeit der mindestens einen Granulatkomponente entsprechend erhöht oder erniedrigt wird, wenn die Summe der gemessenen Gesamtgewichte der beiden Behälter (6, 13) von einem vorgegebenen Sollgewicht abweicht.

2. Vorrichtung zur Durchführung des Verfahrens nach Anspruch 1 mit einem auf einer Wiegeeinrichtung (5) abgestützten oder an dieser angehängten Aufgabebehälter (6), dem ein Vorratsbehälter (16), in den mindestens eine Fördereinrichtung (18, 9) für ein Kunststoff-Granulat mündet, vorgeschaltet ist, dadurch gekennzeichnet, daß zwischen dem Vorratsbehälter (16) und dem Aufgabebehälter (6) ein auf einer Wiegeeinrichtung (14) abgestützter oder an diese angehängter Chargenbereitstellungsbehälter (13) angeordnet ist, in dessen Einlauf der Auslauf (15) des Vorratsbehälters (16) berührungsfrei mündet, daß in den Vorratsbehälter (16) eine kontinuierlich Randstreifen zurückführende Fördereinrichtung (20) mündet und daß der Auslaufstutzen (10) des Chargenbereitstellungsbehälters (13) mit einer steuerbaren Verschlußeinrichtung (12) versehen und eine Einrichtung zum Messen der Zeiten vorgesehen ist, die zwischen den Öffnungszeiten der Verschlußeinrichtung (12) liegen, und daß eine Einrichtung zur Steuerung der Fördergeschwindigkeit der mindestens einen Fördereinrichtung (18, 19) für ein Kunststoff-Granulat in Abhängigkeit der Summe der gemessenen Gesamtgewichte des Aufgabebehälters (6) und des Chargenbereitstellungsbehälters (13) vorgesehen ist.

3. Vorrichtung nach Anspruch 2, dadurch gekennzeichnet, daß bei zwei und mehreren in den Vorratsbehälter (16) mündenden Fördereinrichtungen (18, 19) für Kunststoff-Granulat das Verhältnis von deren Förderraten bei einer Veränderung der Fördergeschwindigkeit gleichbleibt.

## Claims

1. Process for determining the mass flow rate per unit time of a plastic granulate (quantity measured by weight of granulate over time) removed by an extruder (1) out of a feed hopper (6) of which the outlet (7) merges with the inlet (8) of said extruder (1), in which process granulate is continuously charged into a storage bin (16) and a charge of granulate is intermittently directed into the feed hopper (6), in which process the feed hopper (6), before or on commencement and after or on completion of its filling operation, is weighed and the time is measured which is required between the charging operations for removal of the material quantity determined from the weighing operations, and in which process the material flow rate is calculated from the quantities of material removed from the feed hopper during the measured time intervals,
**characterised in that**
the storage bin (16) is essentially utilised solely as a mixing container, and between this and the feed hopper (6) is arranged an additional charge preparation bin (13) which is fed by the storage bin (16),
that at least one component of the granulate and a recycled edge strip material is fed continuously into the storage bin (16),
and that the feed hopper (6) and the charge preparation bin (13) are weighed at time intervals, and the feed rate of at least one granulate component is correspondingly increased or decreased if the sum of the total weights measured for the two containers (6, 13) deviates from a predetermined setpoint weight.

2. Device for performing the process according to Claim 1, with a feed hopper (6) supported on a weighing apparatus (5) or suspended from such apparatus, which feed hopper (6) is fed via a storage bin (16) which in turn is fed by at least one upstream conveying device (18, 9) for a plastic granulate, characterised in that, between the storage bin (16) and the feed hopper (6) is arranged a charge preparation bin (13) mounted on a weighing facility (14) or suspended from such a facility, the inlet of which merges contact-free with the outlet (15) of the storage bin (16), that the storage bin (16) is continuously fed by a conveyor (20) returning the recycled edge strips, that the outlet nozzle (10) of the charge preparation bin (13) is provided with a controllable closing device (12), that a device is provided for measuring the times which lie between the opening times of the closure (12), and that a device for controlling the transport speed of at least one conveyor (18, 19) for plastic granulate as a function of the sum of the measured total weights of the feed hopper (6) and the charge preparation bin (13) is provided.

3. Device according to Claim 2, characterised in that, where there are two or more conveyors (18, 19) feeding the storage bin (16) with plastic granulate, the ratio of their feed rates remains constant in the event of a change in the delivery rate.

## Revendications

1. Procédé pour déterminer le débit de matière de granulé de plastique (quantité mesurée en poids de granulé/temps) retirée par une extrudeuse (1) à partir de la sortie (7) d'une trémie d'alimentation (6) débouchant dans l'entrée (8) de l'extrudeuse, dans lequel du granulé est en permanence acheminé dans un réservoir (16) et une quantité de remplissage (charge) de granulé est dirigée par intermittence dans la trémie d'alimentation (6), dans lequel la trémie d'alimentation (6) est pesée avant ou au début et après ou à l'achèvement de son remplissage et le temps est mesuré qui est nécessaire pour le retrait, entre les remplissages, de la quantité de matière déterminée par les pesées, et dans lequel est calculé le débit de matière dans le temps à partir des quantités de matière retirées de la trémie d'alimentation dans les périodes mesurées,
caractérisé en ce que
le réservoir (16) est essentiellement utilisé comme réservoir mélangeur seulement et qu'entre celui-ci et la trémie d'alimentation (6) un récipient de préparation des charges (13) supplémentaire est disposé, dans lequel le réservoir (16) débouche, qu'au moins un composant du granulé et la matière récupérée des bandes marginales sont acheminées de manière continue,
que la trémie d'alimentation (6) et le récipient de préparation de la charge (13) sont pesés à intervalles et la vitesse d'alimentation d'au moins du composant unique de granulé est augmentée ou abaissée en correspondance lorsque la somme des poids totaux mesurée des deux récipients (6, 13) dévie d'un poids théorique prescrit.

2. Dispositif pour la réalisation du procédé selon la revendication 1, comportant une trémie d'alimentation (6) reposant ou étant raccrochée à un dispositif de pesée (5), précédée en amont par un réservoir (16) dans lequel aboutit au moins un dispositif de transport (18, 9) pour le granulé de plastique, caractérisé en ce qu'entre le réservoir (16) et la trémie d'alimentation (6) un récipient de préparation de la charge (13) s'appuyant ou étant accroché à un dispositif de pesée est disposé entre le réservoir (16) et la trémie d'alimentation (6), dans l'entrée duquel la sortie (15) du réservoir (16) débouche sans contact, que dans le réservoir (16) débouche un dispositif de transport (20) ramenant de manière continue la matière récupérée des bandes marginales et que la tubulure de sortie (10) du récipient de préparation de la charge (13) est pourvue d'un dispositif de fermeture (12) réglable et qu'un dispositif est prévu pour mesurer les périodes qui se trouvent entre les périodes d'ouverture du dispositif de fermeture (12), et qu'un dispositif est prévu pour commander la vitesse de transport du dispositif de transport (18, 19), au nombre d'un au moins, pour le granulé de plastique en fonction de la somme des poids totaux mesurés de la trémie d'alimentation (6) et du récipient de préparation de la charge (13).

3. Dispositif selon la revendication 2, caractérisé en ce qu'en présence de deux ou de plusieurs dispositifs de transport (18, 19) pour le granulé de plastique débouchant dans le réservoir (16), le rapport de leur débit de transport reste identique lorsque la vitesse de transport est modifiée.
